# EUROPÄISCHE PATENTSCHRIFT

(11) **EP 2 378 127 B1**
(45) Veröffentlichungstag und Bekanntmachung des Hinweises auf die Patenterteilung: **08.05.2019**
(21) Anmeldenummer: 11159500.5
(22) Anmeldetag: 24.03.2011
(51) Int. Cl.: F04D 15/00, F04D 29/18, F04D 29/56, F16K 3/02, F16K 3/32, F16K 5/06, F16K 5/10

(54) **Strömungsführendes Bauteil mit Pumpe und Armatur**
Flow guiding component with pump and fitting
Composant de guidage d'écoulement doté d'une pompe et d'une robinetterie

(30) Priorität: 16.04.2010 DE 102010015486
(43) Veröffentlichungstag der Anmeldung: 19.10.2011
(73) Patentinhaber: KSB SE & Co. KGaA, 67227 Frankenthal (DE)
(72) Erfinder: Bosbach, Franz Gerhard, 67251 Freinsheim (DE); Huying, Daniel, 67227 Frankenthal (DE)

(56) Entgegenhaltungen:
- DE-A1- 3 732 038
- DE-A1- 10 247 424
- DE-A1- 10 344 309
- GB-A- 891 076
- JP-A- S5 564 186

## Beschreibung

Die Erfindung betrifft ein Bauteil für ein strömungsführendes System mit einer kombinierten Pumpen-Antriebseinheit, wobei die Pumpen-Antriebseinheit eine Antriebseinheit und eine von dieser antreibbare Pumpeneinheit mit einem Laufrad aufweist, wobei das Bauteil ein Gehäuse mit mindestens einer Ein- und mindestens einer Ausgangsseite und einen dazwischen angeordneten, beweglichen Absperrkörper aufweist, wobei in mindestens einer Stellung des Absperrkörpers ein Strömungsweg zwischen Ein- und Ausgangsseite gebildet ist und die Pumpeneinheit im Strömungsweg zwischen Ein- und Ausgangsseite angeordnet ist.

Durch die WO 2009/070565 A1 ist ein gattungsgemäßes Bauteil bekannt. Ein als Pumpe gestaltetes strömungsführendes Bauteil besitzt ein Gehäuse mit mindestens einem Eingang und mindestens einem Ausgang. Ein Laufrad zur Förderung eines Fluids wird von einem Motor angetrieben. Ein drehbares Ventil ist zwischen Laufrad und der Ausgangsseite der Pumpe angeordnet und weist eine Öffnung auf. Das Ventil dient dazu, mittels der drehbar positionierbaren Öffnung einen Fluidstrom in verschiedene Ausgänge oder Ausgangskanäle zu kanalisieren. Das strömungsführende Bauteil der WO 2009/070565 A1 ist konstruktiv aufwändig und besitzt den weiteren Nachteil, dass bei einer Wartung der Pumpe der Strömungsweg aufzutrennen ist. Daher ist eine solche Konstruktion für viele Anwendungen, wie beispielsweise die chemische Verfahrenstechnik, nicht verwendbar.

Die WO 01/07836 A1 offenbart ein Mischventil mit einem Gehäuse und mit Ein- und Auslässen an dem Gehäuse und einem die Verbindung zwischen den Ein- und Auslässen steuernden Steuerkörper, der als rotierendes Pumpenrad ausgebildet ist, das durch axiale Verschiebung die Verbindung zwischen den auf unterschiedlichen Ebenen liegenden Ein- und Auslässen steuert. Das Pumpenrad wird über eine hohle Welle von einem Motor angetrieben. Bei diesem Mischventil mit integrierter Pumpe können in Abhängigkeit des axial verschieblichen Steuerkörpers verschiedene Strömungswege realisiert werden. Bei dieser speziell für Mischventile in geschlossenen Heizkreisläufen verwendeten Konstruktion ist das Pumpenrad integraler Bestandteil des Steuerkörpers. Bei einer Wartung ist die gesamte Anordnung auszubauen, was oben beschriebene Nachteile bedingt.

Die DE 1 912 655 A offenbart ein mit einer Pumpe kombiniertes Dreiwegemischventil. In einem Ventilgehäuse sind durch Trennwandungen drei Kammern abgeteilt, von denen eine mittlere als Pumpenkammer mit einem Ventilauslass ausgebildet ist und die beiden anderen jeweils mit einem Ventileinlass verbunden sind. In der mittleren Kammer ist ein hohlzylindrischer, mit einem Antriebsmotor gekuppelter und in den Trennwandungen drehbar gelagerter Schleuderpumpenkörper angeordnet. Dieser steht mit den beiden anderen Kammern in Verbindung und dessen Zuflussöffnungen sind durch zwei von außen betätigbare, auf einer gemeinsamen Ventilspindel sitzende Ventilkörper in ihrem Durchtrittsquerschnitt regelbar. Zwischen zwei Grenzstellungen der Ventilkörper ist eine beliebige Verstellung der Ventilspindel vorgesehen. Die Pumpeneinheit verbleibt dabei immer in Verbindung zum Ventilauslass.

Die DE 43 00 213 A1 offenbart eine Vorrichtung zum Auswechseln eines in einer Rohrleitung angeordneten Aggregates.

Die JP S55 64186 A zeigt eine kombinierte Pumpen-Armaturen-Anordnung, bei der die Pumpen-Antriebseinheit teilweise im Absperrkörper angeordnet ist.

Die DE 37 32 038 A1 zeigt eine Pumpe, deren Fördervolumen frei justierbar ist, wobei insbesondere bei der Pumpe der auf Schaufeln und den Pumpendeckel zum Justieren der effektiven Länge der Schaufeln wirkende Wasserwiderstand reduziert ist.

Aufgabe der Erfindung ist es, ein strömungsführendes Bauteil der eingangs genannten Art zur Verfügung zu stellen, das wenig aufwändig aufgebaut und wartungsfreundlich ist.

Diese Aufgabe wird erfindungsgemäß durch ein Bauteil für ein strömungsführendes System mit den Merkmalen des Anspruchs 1 gelöst, nämlich dadurch, dass das Bauteil in mindestens einer weiteren Stellung des Absperrkörpers den Strömungsweg derart abzusperren vermag, dass durch den Absperrkörper und das Bauteilgehäuse ein vom Strömungsweg abgetrennter Bereich gebildet ist, der gegenüber der Ein- und Ausgangsseite abgedichtet ist, wobei die Pumpen-Antriebseinheit innerhalb dieses Bereiches angeordnet oder anordbar ist. In der weiteren Stellung des Absperrkörpers ist durch den Absperrkörper, das Bauteilgehäuse und gegebenenfalls die Pumpeneinheit ein vom Strömungsweg abgetrennter Bereich gebildet. Der Absperrkörper sperrt in abdichtender Weise diesen Bereich komplett von dem Ein- und Ausgang des Strömungsweges ab. Innerhalb dieses abgedichteten Bereichs ist die Pumpen-Antriebseinheit zu einem Teil oder vollständig angeordnet. Insbesondere ist die Pumpeneinheit vollständig innerhalb des abgetrennten Bereiches angeordnet. Infolgedessen ist die Pumpen-Antriebseinheit wartbar ohne dass eine Verbindung zum Förderfluid besteht. Zusätzliche Vorkehrungen zur Strömungsumleitung oder abdichtende Maßnahmen sind nicht zu treffen. Im Vergleich zu einem herkömmlichen absperrenden, strömungsführenden Bauteil ohne Pumpeneinheit ist ein in seinem Verhalten im abgesperrten Zustand vollkommen gleichartig zu verwendendes Bauteil geschaffen. Die Dichtigkeit kann in schneller und sicherer Weise hergestellt werden. Im nicht abgesperrten Zustand ist die Pumpeneinheit direkt im Strömungsweg angeordnet und erfüllt ihre Förder- und/oder druckerhöhende Funktion.

Nach der Erfindung ist es vorgesehen, dass die Pumpen-Antriebseinheit zumindest zu einem Teil in dem Absperrkörper angeordnet oder eingebracht ist. Eine solche Integration der Pumpen-Antriebseinheit in den Absperrkörper spart Einbauraum. Dabei ist es sowohl vorgesehen, dass die Pumpen-Antriebseinheit in den Absperrkörper ganz oder teilweise eingebracht ist als auch dass diese als integraler Bestandteil in den Absperrkörper eingebettet ist.

Nach einer Ausgestaltung der Erfindung ist der Absperrkörper mehrteilig aus zueinander beabstandeten Absperrkörperelementen aufgebaut und die Pumpen-Antriebseinheit ist zwischen den Absperrkörperelementen angeordnet, anordbar oder eingebracht.

Von Vorteil ist es, dass das Laufrad ein Kreiselpumpenlaufrad von axialer oder halbaxialer Bauart ist. Ein solches Laufrad eignet sich insbesondere für Inline-Anordnungen von Ein- und Ausgangsseite, also für Anordnungen, bei denen die Lage von Ein- und Ausgangsseite des erfindungsgemäßen Bauteils den Einbau in eine geradlinig verlaufende Rohrleitung gestatten. Alternativ ist ein radiales Kreiselpumpenlaufrad vorgesehen, das druckseitig zusätzlich eine strömungsumlenkende Leiteinrichtung aufweisen kann.

Idealerweise ist das Laufrad der Pumpeneinheit vollständig wellenlos, also ohne eine zentrische Welle, ausgebildet. Die das Laufrad bildenden Laufradschaufeln können von außen in den Strömungsweg hineinragen. Dabei können sie in einem zentralen Bereich des Strömungsweges zueinander beabstandet angeordnet sein, so dass eine schaufellose Strömungspassage gebildet ist. Alternativ können die Laufradschaufeln sich berührend ausgebildet sein, wodurch das Laufrad stabiler wird.

Die Pumpen-Antriebseinheit besitzt zweckmäßigerweise ein in einem als Ring ausgebildeten Rotor angeordnetes Laufrad und einen als den Rotor komplett umgebenden Ring ausgebildeten Stator. Ein hohler, ringförmiger Rotor wird also von einem hohlen, ringförmigen Stator umgeben. Die Laufradschaufeln sind zweckmäßigerweise an einer Innenfläche des Rotors befestigt. Von Vorteil ist es, wenn der Rotor ein permanentmagneterregter Synchronrotor ist. Der Rotorring bildet dabei den Träger für die in den Strömungsweg ragenden Laufradschaufeln. Von Vorteil ist es zudem, wenn der Rotor als Bestandteil der Pumpeneinheit ausgebildet ist.

Vorteilhafte Strömungsverhältnisse sieht eine Ausgestaltung vor, wonach der Absperrkörper einen Strömungsdurchgang mit einem Strömungsquerschnitt aufweist, der dem freien Strömungsquerschnitt, also dem Strömungsquerschnitt unter Berücksichtigung der Laufradschaufeln der Pumpeneinheit, der Pumpeneinheit entspricht. Dazu kann der Absperrkörper konusartig ausgebildet sein. Insbesondere ist es vorgesehen, dass der Absperrkörper einen Strömungsdurchgang aufweist, dessen Durchmesser sich zur Pumpeneinheit hin auf den inneren Durchmesser des Strömungsdurchganges der Pumpeneinheit konisch erweitert. Ebenfalls ist es vorgesehen, dass der Absperrkörper einen Strömungsdurchgang aufweist, dessen Durchmesser dem inneren Durchmesser der Pumpeneinheit, insbesondere dem inneren Durchmesser des Rotorringes, entspricht.

Erfindungsgemäß ist die Pumpen-Antriebseinheit bei abgesperrtem Strömungsweg aus dem Bauteil herausnehmbar oder in das Bauteil einsetzbar gestaltet. Die Pumpen-Antriebseinheit kann in den Absperrkörper einschiebbar ausgeführt sein. Die Pumpen-Antriebseinheit kann dazu mit Führungsmitteln ausgestattet sein, die in entsprechenden Aufnahmen des Absperrkörpers geführt sind.

Eine hinsichtlich Materialaufwand günstige Variante ergibt sich, wenn die Pumpen- und/oder die Antriebseinheit plattenförmig gestaltet ist und/oder an die Abmessungen des Absperrkörpers angepasst ist. Ein Ende der Pumpen-Antriebseinheit kann dabei eine bogenförmige, insbesondere kreisbogenförmige, Kontur aufweisen.

Erfindungsgemäß ist als ein einen Strömungsweg definierendes Bauteil eine Rohrleitung vorgesehen. Von besonderem Vorteil ist ein als Armatur ausgebildetes Bauteil. Dabei ist der Absperrkörper der Armatur vorteilhafterweise als Kugelhahn ausgebildet. Ein Kugelhahn kann durch Drehen um beispielsweise 90 Grad in eine den Strömungsweg absperrende Position gebracht werden. Ein Drehen des Kugelhahnes um etwa 180 Grad bewirkt eine Förderrichtungsumkehr der Pumpeneinheit. Das erfindungsgemäße Bauteil gestattet so ein Fördern in umgekehrter Strömungsrichtung ohne Wirkungsgradverluste. Die Pumpen-Antriebseinheit ist idealerweise vollständig im Kugelhahn angeordnet. Das in der Pumpeneinheit angeordnete Laufrad kann von axialer, halbaxialer oder radialer Bauart sein. Eine an Absperrkörper und Pumpeneinheit angepasste Form der Pumpen-Antriebseinheit kann vorteilhafterweise die eines Zylinders mit einem halbkugelförmigen Ende annehmen, die in die Kugel des Kugelhahnes einsetzbar ist.

Der Absperrkörper ist alternativ als Schieber ausgebildet. Dieser ist vorteilhafterweise in das Bauteil einschiebbar gestaltet. Die Pumpen-Antriebseinheit ist in diesem Falle zweckmäßigerweise im Schieber angeordnet. Der Schieber besitzt dabei idealerweise einen oberen Bereich, der der Absperrung des Strömungsweges dient und einen unteren Bereich, der die Pumpeneinheit aufnimmt. Je nachdem wie ein solcher Schieber innerhalb des strömungsführenden Bauteils positioniert ist, befindet sich der absperrende Teil oder die Pumpeneinheit im Strömungsweg. Gemäß einer weiteren Variante der Erfindung verfügt die Pumpen-Antriebseinheit bei abgesperrtem Strömungsweg über einen von außen zugänglichen Gehäuseraum.

Im Rahmen der Erfindung liegen auch weitere Armaturen wie Klappen, Ventile, Rückflussverhinderer oder dergleichen.

Erfindungsgemäß ist es vorgesehen, dass das Bauteil ein mehrteiliges, insbesondere ein zweiteiliges, Gehäuse aufweist, wobei die Gehäuseteile den Absperrkörper und die Pumpen-Antriebseinheit zumindest teilweise umschließen. Ein zweiteiliges Gehäuse besitzt zweckmäßigerweise aus zwei Halbschalen gebildete Gehäusehälften.

Ebenfalls ist es vorgesehen, dass der Absperrkörper des Bauteils einen zusätzlichen freien Durchgang aufweist. Dadurch kann das Bauteil zwischen drei Stellungen umgeschaltet werden. Zusätzlich zum abgesperrten Zustand und zum Zustand mit der Pumpe im Strömungsweg ist dadurch noch der Zustand mit einem komplett freien Durchgang vorgesehen. Die Anordnung ist dabei so gestaltet, dass das Bauteil bei ausgebauter Pumpen-Antriebseinheit zwischen abgesperrtem Strömungsweg und komplett freiem Strömungsweg geschaltet werden kann. Zweckmäßigerweise sind Sperrmittel vorgesehen, die verhindern, dass bei ausgebauter Pumpen-Antriebseinheit das Bauteil versehentlich in eine falsche Stellung umgeschaltet wird. Erfindungsgemäß ist es ebenfalls vorgesehen, dass der Absperrkörper nach Art eines Ventilkörpers stufenlos einen Durchtrittsquerschnitt des Strömungsweges freigibt.

Bei Bedarf können zum Aufbau eines strömungsführenden Systems auch mehrere, gegebenenfalls verschiedene, erfindungsgemäße Bauteile miteinander kombiniert werden. Die erfindungsgemäßen Bauteile sind dazu miteinander verbindbar gestaltet.

Durch die erfindungsgemäße Gestaltung der absperrenden Einrichtung mit der integrierten Pumpe lassen sich neue Regelstrategien des Fluidhandlings realisieren. Dabei ist es vorgesehen, dass eine Regeleinrichtung die Stellung des Absperrkörpers und das Betriebsverhalten der Pumpen-Antriebseinheit regelt und/oder steuert. Vorteile bei sensiblen Prozessen bietet ein schnelles und effizientes Schließen der Armatur in Kombination mit einem sanften Einregeln des Fluidstromes durch die Pumpe.

Ein weiterer Aspekt der vorliegenden Erfindung betrifft ein Verfahren zum Betrieb des erfindungsgemäßen Bauteils mit den Merkmalen des Anspruchs 13. Ausführungsbeispiele der Erfindung sind in den Zeichnungen dargestellt und werden im Folgenden näher beschrieben. Es zeigen die
- Fig. 1a, b: ein erfindungsgemäßes Bauteil mit einem Kugelhahn bei geöffnetem Strömungsweg, die
- Fig. 2a, b: das gleiche Bauteil bei abgesperrtem Strömungsweg, die
- Fig. 3: das gleiche Bauteil bei abgesperrtem Strömungsweg und entnommener Pumpen-Antriebseinheit, die
- Fig. 4: einzelne Komponenten des Bauteils, die
- Fig. 5a bis d: ein erfindungsgemäßes Bauteil mit einem als Schieber gestalteten Absperrkörper mit Pumpen-Antriebseinheit, und die
- Fig. 6: ein weiteres erfindungsgemäßes Bauteil mit einer mit einem radialen Laufrad ausgestatteten Pumpeneinheit.

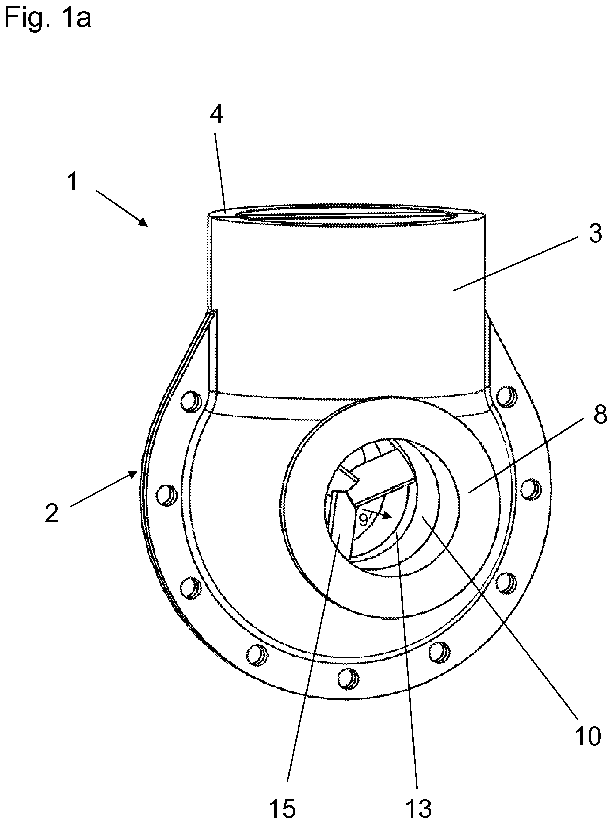

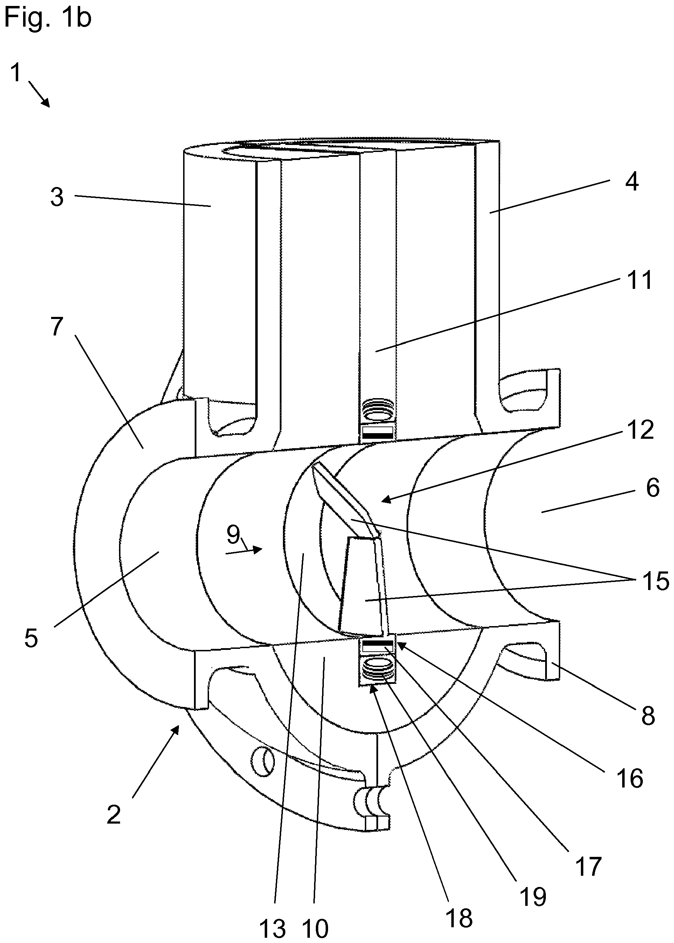

Die Figur 1a zeigt ein erfindungsgemäßes, einen Strömungsweg definierendes Bauteil 1 für ein strömungsführendes System in einer perspektivischen Darstellung. Die Figur 1b zeigt das gleiche Bauteil 1 in einem Schnitt. Das Bauteil 1 besitzt ein Gehäuse 2 mit Gehäusehälften 3, 4. Das Bauteil 1 besitzt eine Eingangsseite 5 und eine Ausgangsseite 6. Das Bauteil 1 weist eingangsseitig einen Flansch 7 und ausgangsseitig einen Flansch 8 auf. Innerhalb des Bauteilgehäuses 2 ist ein Absperrkörper 10 in Form eines Kugelhahnes angeordnet. Der Absperrkörper 10 ist im Bauteilgehäuse 2 drehbar beweglich angeordnet. Der Absperrkörper 10 ist mittels eines nicht dargestellten Betätigungs- oder Positioniermittels per Hand oder durch einen Antrieb in verschiedene Stellungen drehbar. Aus Gründen der Übersichtlichkeit ebenfalls nicht dargestellt sind eine optionale Überwachungs-, Regelungs- und/oder Steuereinrichtung, deren Energieversorgung sowie eine Energieversorgung der Pumpen-Antriebseinheit 11. Im gezeigten geöffneten Zustand gibt das Bauteil 1 einen durch einen Pfeil gekennzeichneten Strömungsweg 9 zwischen Eingangsseite 5 und Ausgangsseite 6 frei. Erfindungsgemäß besitzt das Bauteil 1 eine kombinierte Pumpen-Antriebseinheit 11, wobei die Pumpen-Antriebseinheit 11 innerhalb eines vom Strömungsweg 9 in einer weiteren Stellung des Absperrkörpers 10 abtrennbaren Bereiches, der gegenüber der Eingangsseite 5 und der Ausgangsseite 6 abgedichtet ist, angeordnet ist. Eine Pumpeneinheit 12 ist mit einem ringförmigen Rotor 16 mit Permanentmagneten 17 integral verbunden. Der Rotor 16 wirkt mit einem ringförmigen Stator 18 mit einer Statorwicklung 19 zusammen. An einer Innenfläche 13 des Rotors 16 sind Laufradschaufeln 15 angeordnet. Die Laufradschaufeln 15 bilden ein Kreiselpumpenlaufrad axialer Bauart. Im gezeigten Zustand der geöffneten Armatur ist die Pumpeneinheit 12 im Strömungsweg 9 zwischen Eingangsseite 5 und Ausgangsseite 6 angeordnet. Das Laufrad ist wellenlos gestaltet, wobei sich die Laufradschaufeln 15 in einem zentralen Bereich berühren, wodurch die Anordnung stabiler ist.

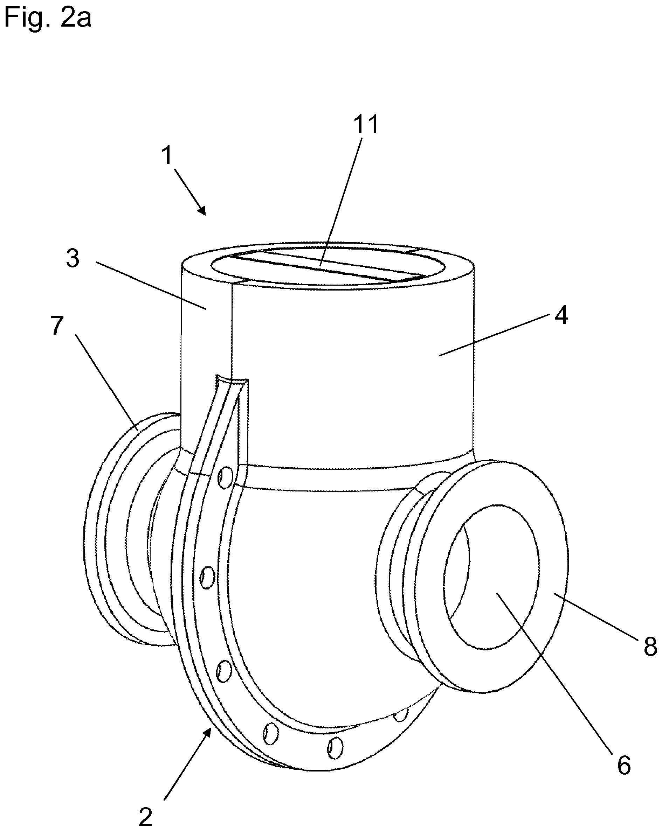

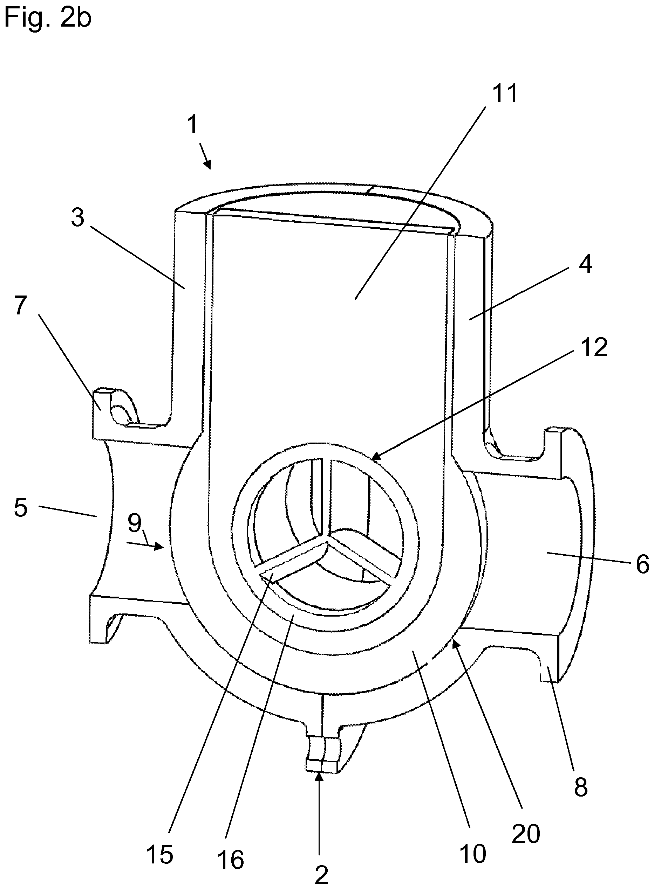

Die Figur 2a zeigt in einer perspektivischen Darstellung das gleiche Bauteil 1 in geschlossenem Zustand. Die Figur 2b zeigt das Bauteil in einem Schnitt. Der Absperrkörper 10 in Form des Kugelhahnes ist im Vergleich zu den Figuren 1a, 1b um etwa 90 Grad gedreht. In dieser weiteren Stellung sperrt das Bauteil 1 den Strömungsweg 9 derart ab, dass durch den Absperrkörper 10 und das Bauteilgehäuse 2 ein vom Strömungsweg 9 abgetrennter Bereich 20 gebildet ist. Dieser Bereich 20 ist sowohl gegenüber der Eingangsseite 5 als auch der Ausgangsseite 6 abgedichtet. In dieser Stellung des Absperrkörpers 10 besteht keinerlei Verbindung von der Eingangsseite 5 oder der Ausgangsseite 6 zur Pumpen-Antriebseinheit 11, die damit vom Förderfluid getrennt ist. Die Pumpen-Antriebseinheit 11 ist vollständig im Absperrkörper 10 angeordnet. Zusätzlich ist die Pumpen-Antriebseinheit 11 aus dem Absperrkörper 10 herausnehmbar beziehungsweise einsetzbar gestaltet. Dadurch ist die Pumpen-Antriebseinheit 11 im Wartungsfall einfach aus dem Absperrkörper 10 herausnehmbar und wartbar. Es sind keine zusätzlichen Vorkehrungen zur Strömungsumleitung oder zusätzliche abdichtende Maßnahmen zu treffen.

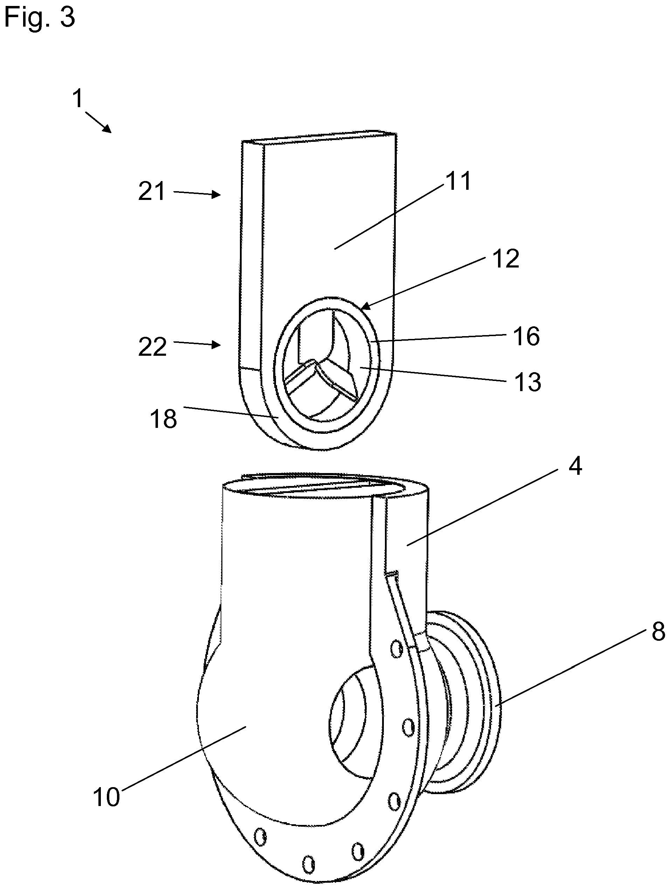

Die Figur 3 zeigt nun das gleiche Bauteil 1 bei abgesperrtem Strömungsweg und entnommener Pumpen-Antriebseinheit 11. Das Bauteil 1 ist mit nur einer Gehäusehälfte 4 gezeigt. Die Pumpen-Antriebseinheit 11 ist plattenförmig gestaltet. Sie besitzt einen oberen Bereich 21 und einen unteren Bereich 22. Im unteren Bereich 22 ist eine Pumpeneinheit 12 angeordnet. Die Pumpen-Antriebseinheit 11 besitzt einen hohlen, ringförmigen Rotor 16, nachfolgend auch Rotorring genannt, der von einem hohlen, ringförmigen Stator 18, nachfolgend auch Statorring genannt, umgeben ist. Als Rotor 16 eignet sich beispielsweise ein permanentmagneterregter Synchronrotor. Der Rotor 16 ist im Statorring 18 gelagert. Der Innendurchmesser des Rotors 16 weist den gleichen Durchmesser wie der Strömungsdurchgang des Absperrkörpers 10 auf. Die Innenfläche 13 des Rotorringes 16 ist hinsichtlich Material und konstruktiver Gestaltung an die Innenfläche des Durchganges des Kugelhahnes angepasst. Es bestehen daher keinerlei Beeinträchtigungen des Strömungsweges bei in das Bauteil 1 eingeschobener Pumpen-Antriebseinheit 11. Der untere Bereich 22 der Pumpen-Antriebseinheit 11 ist an die Abmessungen des Absperrkörpers 10 angepasst und besitzt eine halbkreisförmige Kontur. Hier nicht dargestellt sind Führungsmittel an der Pumpen-Antriebseinheit mittels derer diese in den Absperrkörper 10 einschiebbar ist. Der Absperrkörper 10 kann dazu entsprechende ebenfalls hier nicht dargestellte Aufnahmen zur Führung aufweisen.

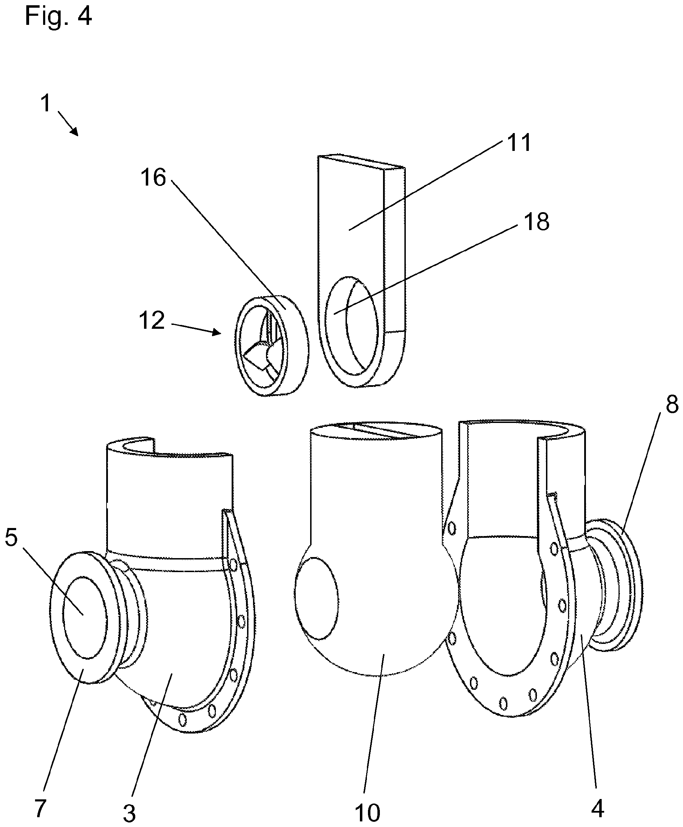

Die Figur 4 zeigt das strömungsführende Bauteil 1 mit seinen einzelnen Komponenten. Dabei ist das Bauteil 1 mit seinem Absperrkörper 10 in Form eines Kugelhahnes von einem mehrteiligen Gehäuse umgeben, dessen Gehäuseteile, hier Gehäusehälften 3, 4 mit Flanschen 7, 8, den Absperrkörper 10 und die Pumpen-Antriebseinheit 11 umschließen. Die Pumpeneinheit 12 ist zusammen mit dem ringförmigen Rotor 16 aus dem ringförmigen Stator 18 entnehmbar.

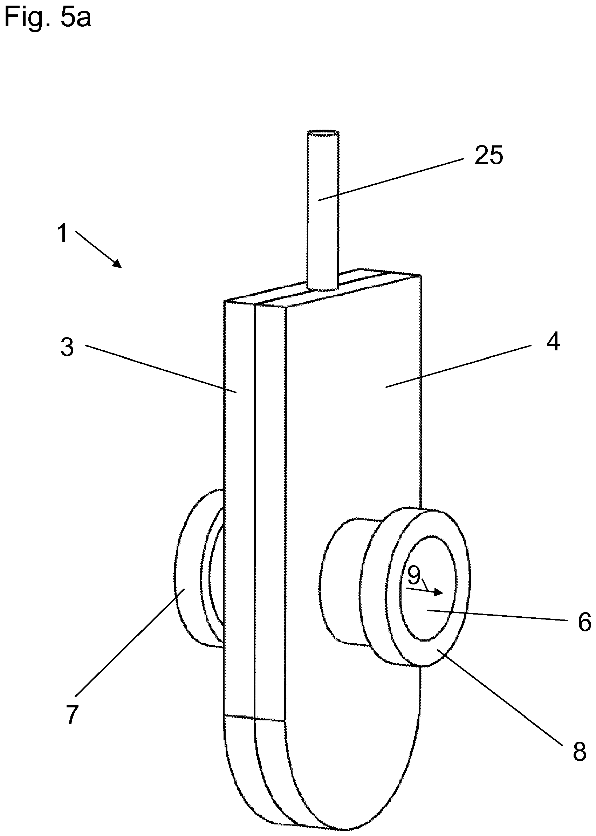

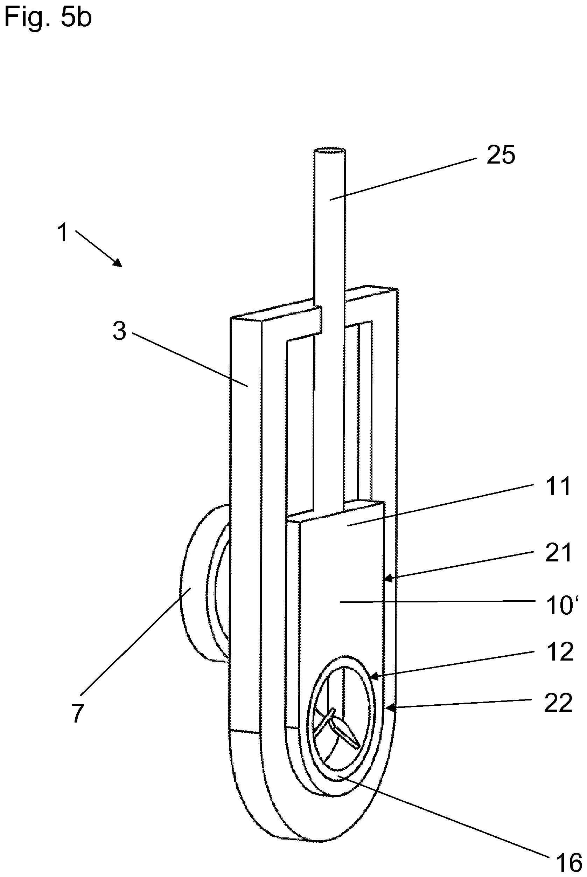

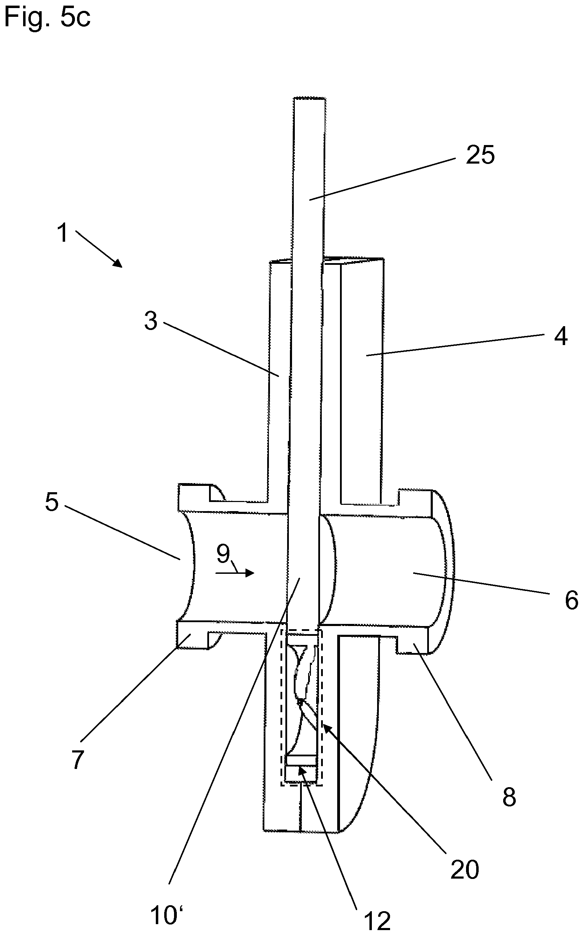

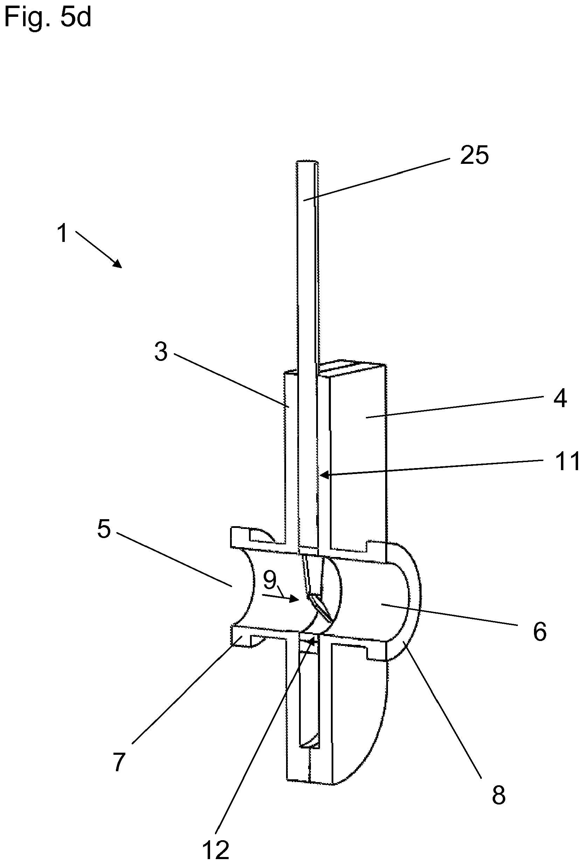

Die Figuren 5a, 5b, 5c, 5d zeigen eine alternative Ausgestaltung eines erfindungsgemäßen Bauteils 1, bei der ein Absperrkörper 10' in Form eines Schiebers Verwendung findet. Dabei zeigt die Figur 5a das Bauteil 1 in einer perspektivischen Darstellung, die Figur 5b eine Hälfte des Bauteiles 1 bei abgesperrtem Strömungsweg, die Figur 5c einen Schnitt durch das Bauteil 1 bei abgesperrtem Strömungsweg und die Figur 5d einen Schnitt durch das Bauteil 1 bei geöffnetem Strömungsweg. Wie am besten in der Figur 5b erkennbar besitzt der Schieber einen oberen Bereich 21, der mittels Absperrkörper 10' der Absperrung des Strömungsweges dient und einen unteren Bereich 22, der die Pumpeneinheit 12 inklusive Rotorring 16 aufnimmt. Das Bauteil 1 verfügt über ein Positioniermittel 25, mit dem sich der Schieber innerhalb des Bauteiles 1 positionieren lässt. Je nachdem wie der Schieber innerhalb des erfindungsgemäßen Bauteils 1 positioniert ist, befindet sich der absperrende obere Bereich 21 oder die Pumpeneinheit 12 in einem Strömungsweg 9. Bei abgesperrtem Strömungsweg 9 ist die Pumpen-Antriebseinheit 11 mit der Pumpeneinheit 12 inklusive Rotorring 16 in einem vom Strömungsweg 9 abgetrennten, in Figur 5c gestrichelt eingezeichneten, Bereich 20 angeordnet und über einen - hier nicht dargestellten - von außen zugänglichen Gehäuseraum des Bauteiles 1 zugänglich und ohne größeren Aufwand wartbar.

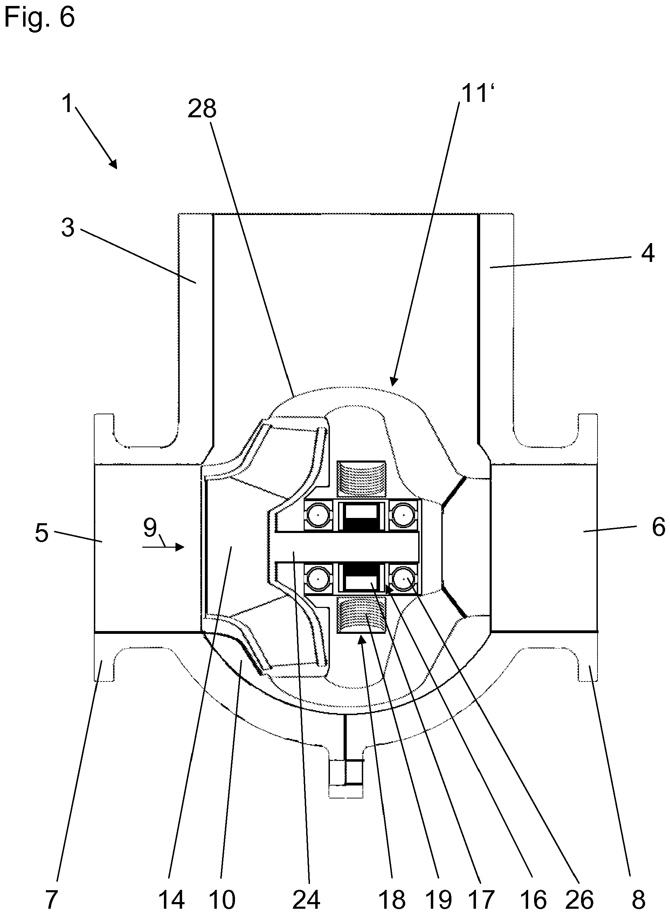

Die Figur 6 zeigt in einem Schnitt ein weiteres erfindungsgemäßes Bauteil 1 mit einer mit einem radialen Laufrad 14 ausgestatteten Pumpen-Antriebseinheit 11'. Das Bauteil 1 besitzt zwei Gehäusehälften 3, 4 mit Flanschen 7, 8. Zwischen einer Eingangsseite 5 und einer Ausgangsseite 6 ist ein mittels Pfeil dargestellter Strömungsweg 9 ausgebildet. Die Gehäusehälften 3, 4 umschließen einen Absperrkörper 10 in Form eines Kugelhahnes. Eine Pumpen-Antriebseinheit 11' ist vollständig innerhalb des Absperrkörpers 10 angeordnet. Die Pumpen-Antriebseinheit 11' besteht aus einem radialen Kreiselpumpenlaufrad 14, das mittels einer Welle 24 angetrieben wird. Auf der Welle 24 ist ein Rotor 16 mit Permanentmagneten 17 befestigt, der mit einem Stator 18 mit einer feststehenden Statorwicklung 19 zusammenwirkt. Die Welle 24 ist mittels einem Lager 26, hier einem Kugellager, gegenüber dem Stator 18 drehbar gelagert. Im gezeigten geöffneten Zustand ist zwischen der Eingangsseite 5 und der Ausgangsseite 6 ein Strömungsweg 9 ausgebildet, der über das Kreiselpumpenlaufrad 14 und eine Leit- und/oder Umlenkeinrichtung 28 geführt ist. Durch eine per Hand oder motorisiert ausgeführte Drehbewegung kann der Kugelhahn um etwa 90 Grad verdreht werden, wodurch der Strömungsweg 9 derart abgesperrt wird, dass die Pumpen-Antriebseinheit 11' komplett innerhalb eines durch den Absperrkörper 10 und das Bauteilgehäuse 2 gebildeten, vom Strömungsweg 9 abgetrennten Bereiches, der gegenüber der Eingangsseite 5 und der Ausgangsseite 6 abgedichtet ist, angeordnet ist.

Die beschriebenen Ausführungsbeispiele der Figuren 1 bis 6 besitzen jeweils eine Eingangsseite und eine Ausgangsseite, wodurch ein Strömungsweg definiert ist. Im Rahmen der Erfindung liegen auch Bauteile mit mehreren Ein- und/oder Ausgangsseiten, wodurch mehrere Strömungswege definiert sind. Ebenfalls sieht die Erfindung ein Bauteil mit einem zusätzlichen freien Durchgang im Absperrköper vor. Dadurch kann das Bauteil zwischen drei Stellungen umgeschaltet werden. Zusätzlich zum abgesperrten Zustand und zum Zustand mit der Pumpeneinheit im Strömungsweg ist nun noch der Zustand mit einem komplett freien Durchgang vorgesehen. Die Anordnung ist dabei so gestaltet, dass das Bauteil bei ausgebauter Pumpen-Antriebseinheit zwischen abgesperrtem Strömungsweg und komplett freiem Strömungsweg geschaltet werden kann. Sperrmittel verhindern dabei, dass bei ausgebauter Pumpen-Antriebseinheit das Bauteil versehentlich in eine falsche Stellung umgeschaltet wird.

### Bezugszeichenliste

- 1: erfindungsgemäßes Bauteil
- 2: Gehäuse
- 3: eingangsseitige Gehäusehälfte
- 4: ausgangsseitige Gehäusehälfte
- 5: Eingangsseite
- 6: Ausgangsseite
- 7: eingangsseitiger Flansch
- 8: ausgangsseitiger Flansch
- 9: Strömungsweg
- 10, 10': Absperrkörper
- 11, 11': Pumpen-Antriebseinheit
- 12: Pumpeneinheit
- 13: Innenfläche
- 14: Laufrad
- 15: Laufradschaufeln
- 16: Rotor
- 17: Permanentmagnete
- 18: Stator
- 19: Statorwicklung
- 20: abgetrennter Bereich
- 21: oberer Bereich
- 22: unterer Bereich
- 24: Welle
- 25: Positioniermittel
- 26: Lager
- 28: Leiteinrichtung

## Patentansprüche

1. Bauteil (1), für ein strömungsführendes System, mit einer Pumpen-Antriebseinheit (11, 11'), wobei die Pumpen-Antriebseinheit (11, 11') eine Antriebseinheit und eine von dieser antreibbare Pumpeneinheit (12) mit einem Laufrad (14) aufweist, wobei das Bauteil (1) ein Gehäuse (2) mit mindestens einer Ein- und mindestens einer Ausgangsseite (5, 6) und einen dazwischen angeordneten, beweglichen Absperrkörper (10, 10') aufweist, wobei in mindestens einer Stellung des Absperrkörpers (10, 10') ein Strömungsweg (9) zwischen Ein- und Ausgangsseite (5, 6) gebildet ist und die Pumpeneinheit (12) im Strömungsweg zwischen Ein- und Ausgangsseite (5, 6) angeordnet ist, wobei das Bauteil (1) in mindestens einer weiteren Stellung des Absperrkörpers (10, 10') den Strömungsweg (9) derart abzusperren vermag, dass durch den Absperrkörper (10, 10') und das Bauteilgehäuse (2) ein vom Strömungsweg (9) abgetrennter Bereich (20) gebildet ist, der gegenüber der Ein- (5) und Ausgangsseite (6) abgedichtet ist, wobei die Pumpen-Antriebseinheit (11, 11') innerhalb dieses Bereiches (20) angeordnet ist, und wobei die Pumpen-Antriebseinheit (11, 11') in dem Absperrkörper (10, 10') angeordnet ist, **dadurch gekennzeichnet, dass** die Pumpen-Antriebseinheit (11, 11') bei abgesperrtem Strömungsweg (9) aus dem Bauteil (1) herausnehmbar oder in das Bauteil (1) einsetzbar ist.

2. Bauteil nach Anspruch 1, **dadurch gekennzeichnet, dass** der Absperrkörper (10, 10') mehrteilig aus zueinander beabstandeten Absperrkörperelementen aufgebaut ist und die Pumpen-Antriebseinheit (11, 11') zwischen den Absperrkörperelementen angeordnet ist.

3. Bauteil nach Anspruch 1 oder 2, **dadurch gekennzeichnet, dass** das Laufrad (14) ein Kreiselpumpenlaufrad von axialer, halbaxialer oder radialer Bauart ist.

4. Bauteil nach einem der Ansprüche 1 bis 3, **dadurch gekennzeichnet, dass** das Laufrad (14) wellenlos ausgebildet ist.

5. Bauteil nach einem der Ansprüche 1 bis 4, **dadurch gekennzeichnet, dass** die Pumpen-Antriebseinheit (11, 11') ein in einem als Ring ausgebildeten Rotor (16) angeordnetes Laufrad (14) und einen als den Rotor (16) komplett umgebenden Ring ausgebildeten Stator (18) aufweist.

6. Bauteil nach Anspruch 5, **dadurch gekennzeichnet, dass** der Rotor (16) ein permanentmagneterregter Synchronrotor ist.

7. Bauteil nach Anspruch 5 oder 6, **dadurch gekennzeichnet, dass** der Absperrkörper (10, 10') einen Strömungsdurchgang aufweist, dessen Durchmesser dem inneren Durchmesser des Rotorringes entspricht.

8. Bauteil nach einem der Ansprüche 1 bis 7, **dadurch gekennzeichnet, dass** die Pumpeneinheit (12) und/oder die Antriebseinheit plattenförmig gestaltet ist und/oder an die Abmessungen des Absperrkörpers (10, 10') angepasst ist.

9. Bauteil nach einem der Ansprüche 1 bis 8, **dadurch gekennzeichnet, dass** das Bauteil (1) als Armatur ausgebildet ist.

10. Bauteil nach Anspruch 9, **dadurch gekennzeichnet, dass** der Absperrkörper (10, 10') als Kugelhahn ausgebildet ist.

11. Bauteil nach Anspruch 9, **dadurch gekennzeichnet, dass** der Absperrkörper (10, 10') als Schieber ausgebildet ist.

12. Bauteil nach einem der Ansprüche 1 bis 11, **dadurch gekennzeichnet, dass** das Bauteil (1) ein mehrteiliges Gehäuse (2) aufweist, dessen Gehäuseteile (3, 4) den Absperrkörper (10, 10') und die Pumpen-Antriebseinheit (11, 11') zumindest teilweise umschließen.

13. Verfahren zum Betrieb eines Bauteils nach einem der Ansprüche 1 bis 12, **dadurch gekennzeichnet, dass** eine Regeleinrichtung die Stellung des Absperrkörpers (10, 10') und das Betriebsverhalten der Pumpen-Antriebseinheit (11, 11') regelt und/oder steuert.

## Claims

1. Unit (1) for a flow-ducting system, with a pump-drive module (11, 11'), the pump-drive module (11, 11') comprising a drive module, and a pump module (12) having an impeller (14) that can be driven by said drive module, the unit (1) comprising a casing (2) having at least one inlet side and at least one outlet side (5, 6) and a moveable shut-off device (10, 10') arranged between them, a flow path (9) between the inlet side and the outlet side (5, 6) being formed in at least one position of the shut-off device (10, 10'), and the pump module (12) being arranged in the flow path between the inlet side and the outlet side (5, 6), the unit (1), in at least one further position of the shut-off device (10, 10'), being capable of shutting off the flow path (9) in such a way that the shut-off device (10, 10') and the unit casing (2) form an area (20), which is separated from the flow path (9) and which is sealed off from the inlet side (5) and the outlet side (6), the pump-drive module (11, 11') being arranged inside this area (20), and the pump-drive module (11, 11') being arranged in the shut-off device (10, 10'), **characterized in that** the pump-drive module (11, 11') is removable from the unit (1) or capable of insertion into the unit (1) when the flow path (9) is shut off.

2. Unit according to Claim 1, **characterized in that** the shut-off device (10, 10') is of multipart construction comprising mutually spaced shut-off device elements and the pump-drive module (11, 11') is arranged between the shut-off device elements.

3. Unit according to Claim 1 or 2, **characterized in that** the impeller (14) is a centrifugal pump impeller of axial, semi-axial or radial type.

4. Unit according to one of Claims 1 to 3, **characterized in that** the impeller (14) is of shaft-less design.

5. Unit according to one of Claims 1 to 4, **characterized in that** the pump-drive module (11, 11') comprises an impeller (14) arranged in a rotor (16) embodied as a ring and a stator (18) embodied as a ring completely enclosing the rotor (16).

6. Unit according to Claim 5, **characterized in that** the rotor (16) is a synchronous rotor excited by permanent-magnets.

7. Unit according to Claim 5 or 6, **characterized in that** the shut-off device (10, 10') comprises a flow passage, the diameter of which corresponds to the inside diameter of the rotor ring.

8. Unit according to one of Claims 1 to 7, **characterized in that** the pump module (12) and/or the drive module is of lamellar design and/or is matched to the dimensions of the shut-off device (10, 10').

9. Unit according to one of Claims 1 to 8, **characterized in that** the unit (1) is embodied as a fitting.

10. Unit according to Claim 9, **characterized in that** the shut-off device (10, 10') is embodied as a ball cock.

11. Unit according to Claim 9, **characterized in that** the shut-off device (10, 10') is embodied as a slide.

12. Unit according to one of Claims 1 to 11, **characterized in that** the unit (1) comprises a multipart casing (2), the casing parts (3, 4) of which at least partially enclose the shut-off device (10, 10') and the pump-drive module (11, 11').

13. Method for the operation of a unit according to one of Claims 1 to 12, **characterized in that** a regulating device regulates and/or controls the position of the shut-off device (10, 10') and the operating behaviour of the pump-drive module (11, 11').

## Revendications

1. Composant (1), pour un système de guidage d'écoulement, avec une unité d'entraînement de pompe (11, 11'), l'unité d'entraînement de pompe (11, 11') comprenant une unité d'entraînement et une unité de pompe (12), pouvant être entraînée par celle-ci, avec une turbine (14), le composant (1) comprenant un boîtier (2) avec au moins un côté d'entrée et au moins un côté de sortie (5, 6) et un corps de blocage mobile (10, 10'), disposé entre eux, un trajet d'écoulement (9) étant formé entre les côtés d'entrée et de sortie (5, 6) dans au moins une position du corps de blocage (10, 10') et l'unité de pompe (12) étant disposée dans le trajet d'écoulement entre les côtés d'entrée et de sortie (5, 6), le composant (1) pouvant, dans au moins une autre position du corps de blocage (10, 10'), bloquer le trajet d'écoulement (9), de façon à ce que le corps de blocage (10, 10') et le boîtier du composant (2) forment une zone (20) séparée du trajet d'écoulement (9), qui est étanchéifiée par rapport aux côtés d'entrée (5) et de sortie (6), l'unité d'entraînement de pompe (11, 11') étant disposée à l'intérieur de cette zone (20) et l'unité d'entraînement de pompe (11, 11') étant disposée dans le corps de blocage (10, 10'), **caractérisé en ce que** l'unité d'entraînement de pompe (11, 11') peut être retirée du composant (1) ou être insérée dans le composant (1) lorsque le trajet d'écoulement (9) est bloqué.

2. Composant selon la revendication 1, **caractérisé en ce que** le corps de blocage (10, 10') est constitué de plusieurs parties à partir d'éléments de corps de blocage écartés entre eux et l'unité d'entraînement de pompe (11, 11') est disposée entre les éléments de corps de blocage.

3. Composant selon la revendication 1 ou 2, **caractérisé en ce que** la turbine (14) est une turbine de pompe centrifuge de construction axiale, semi-axiale ou radiale.

4. Composant selon l'une des revendications 1 à 3, **caractérisé en ce que** la turbine (14) est réalisée sans arbre.

5. Composant selon l'une des revendications 1 à 4, **caractérisé en ce que** l'unité d'entraînement de pompe (11, 11') comprend une turbine (14) disposée dans un rotor (16) présentant une forme annulaire et un stator (18) de forme annulaire entourant entièrement le rotor (16).

6. Composant selon la revendication 5, **caractérisé en ce que** le rotor (16) est un rotor synchrone excité par un aimant permanent.

7. Composant selon la revendication 5 ou 6, **caractérisé en ce que** le corps de blocage (10, 10') comprend un trajet d'écoulement dont le diamètre correspond au diamètre intérieur de l'anneau du rotor.

8. Composant selon l'une des revendications 1 à 7, **caractérisé en ce que** l'unité de pompe (12) et/ou l'unité d'entraînement présentent la forme d'une plaque et/ou sont adaptées aux dimensions du corps de blocage (10, 10').

9. Composant selon l'une des revendications 1 à 8, **caractérisé en ce que** le composant (1) est conçu comme une robinetterie.

10. Composant selon la revendication 9, **caractérisé en ce que** le corps de blocage (10, 10') est conçu comme un robinet à boisseau sphérique.

11. Composant selon la revendication 9, **caractérisé en ce que** le corps de blocage (10, 10') est conçu comme un tiroir.

12. Composant selon l'une des revendications 1 à 11, **caractérisé en ce que** le composant (1) comprend un boîtier (2) en plusieurs parties, dont les parties de boîtier (3, 4) entourent au moins partiellement le corps de blocage (10, 10') et l'unité d'entraînement de pompe (11, 11').

13. Procédé de fonctionnement d'un composant selon l'une des revendications 1 à 12, **caractérisé en ce qu'**un dispositif de régulation régule et/ou contrôle la position du corps de blocage (10, 10') et le comportement de fonctionnement de l'unité d'entraînement de pompe (11, 11').
